# EUROPÄISCHE PATENTSCHRIFT

(11) **EP 0 908 212 B1**
(45) Veröffentlichungstag und Bekanntmachung des Hinweises auf die Patenterteilung: **02.01.2004**
(21) Anmeldenummer: 98118815.4
(22) Anmeldetag: 05.10.1998
(51) Int. Cl.: B01D 24/48, B01D 46/42, B01D 35/143

(54) **Verfahren und Einrichtung zum Überwachen eines Filters auf Funktions fähigkeit**
Process and device for monitoring the operatability of a filter
Procédé et dispositif pour suveiller le fonctionnement d'un filtre

(30) Priorität: 13.10.1997 DE 19744990
(43) Veröffentlichungstag der Anmeldung: 14.04.1999
(73) Patentinhaber: Framatome ANP GmbH, 91058 Erlangen (DE)
(72) Erfinder: Einzmann, Klaus Dipl.-Ing., 91350 Gremsdorf (DE)
(74) Vertreter: Mörtel & Höfner

(56) Entgegenhaltungen:
- EP-A- 0 385 789
- EP-A- 0 554 640
- WO-A-94/11721
- PATENT ABSTRACTS OF JAPAN vol. 95, no. 004, 31. Mai 1995 & JP 07 000801 A (MITSUBISHI MATERIALS CORP), 6. Januar 1995

## Beschreibung

Die Erfindung betrifft ein Verfahren und eine Einrichtung zum Überwachen eines Filters auf Funktionsfähigkeit.

Ein solches Filter dient in der Regel dazu, Schadstoffe zurückzuhalten. Ob es nicht oder nicht mehr vollständig funktionsfähig ist, konnte bisher nur dadurch festgestellt werden, daß in Strömungsrichtung hinter dem Filter noch Schadstoffe zu detektieren waren, die im Filter zurückgehalten werden sollten. Eine nicht ausreichende Funktionsfähigkeit des Filters war also daran zu erkennen, daß bereits Schadstoffe aus dem Filter austraten.

Aus der EP 0 554 640 A1 ist ein Verfahren bekannt, bei dem an einer durchströmten Komponente der Körperschall gemessen wird. Aus dem Körperschall wird der vom strömenden Medium verursachte Schall bestimmt. Mit Hilfe einer empirisch bestimmten Relation kann aus diesem Schall auf Erosionsschäden geschlossen werden.

Die Funktionsfähigkeit eines Filters ist in der Regel durch Erosionsschäden im Filter, sofern solche auftreten können, nicht gefährdet.

Der Erfindung liegt die Aufgabe zugrunde, ein Verfahren und eine Einrichtung zum Überwachen eines Filters auf Funktionsfähigkeit anzugeben, die schon dann eine verminderte Funktionsfähigkeit anzeigen, wenn noch keine oder nur sehr wenige Schadstoffe in der Form von losen Teilen, z.B. in der Form von Partikeln, durch das Filter hindurchtreten.

Die Aufgabe, ein geeignetes Verfahren anzugeben, wird gemäß der Erfindung dadurch gelöst, daß an einem Gehäuse des Filters und/oder an einem mit dem Gehäuse des Filters verbundenen Bauteil ein Körperschallsignal gemessen wird, und daß eine Abweichung des Körperschallsignals von einem vorgegebenen Wert oder Wertebereich ermittelt wird.

Es hat sich nämlich herausgestellt, daß die Funktionsfähigkeit des Filters durch lose Filterteile beeinträchtigt sein kann. Diese losen Filterteile stoßen, während ein Medium durch das Filter strömt, gegen andere Filterteile oder gegen die Wand des Filtergehäuses und verursachen ein Körperschallsignal, das gemessen wird. Ein solches loses Filterteil stellt eine Beschädigung des Filters dar, die später zu einer eingeschränkten Funktionsfähigkeit führen kann. Es wird also vorteilhafterweise eine Beschädigung des Filters erkannt, noch bevor Schadstoffe das Filter passieren.

Darüber hinaus können mit dem Verfahren nach der Erfindung auch Körperschallsignale erkannt werden, die darauf zurückzuführen sind, daß Schadstoffe in der Form von losen Teilen, z.B. in der Form von Partikeln, die im Filter nicht mehr zurückgehalten werden können, auf das Gehäuse oder ein damit verbundenes Bauteil auf treffen. Damit wird der Vorteil erzielt, daß eine herabgesetzte Funktionsfähigkeit bereits erkannt wird, bevor größere Mengen des Schadstoffes durch das Filter hindurchdringen.

Das Filter kann beispielsweise eine Filterschicht und/oder eine Wirbelschicht aus Festkörpern aufweisen. Eine solche Filterschicht, oder eine Wirbelschicht, die als Filter wirken kann, müssen nicht flach ausgebildet sein und können auch die Form eines Filterkörpers haben. Die Festkörper können z.B. Kugeln, beispielsweise Stahlkugeln, oder Kiesteile sein. Es kann also eine Kugelpackung oder ein Kiesbett vorhanden sein.

Die Festkörper erzeugen, wenn sie sich gelöst haben sollten, Körperschallsignale, die gemessen werden. Die Funktionsfähigkeit solcher Filter kann, wegen der deutlichen Signale, die die Festkörper beim Auftreffen auf andere Teile auslösen, besonders gut überwacht werden.

Die Aufgabe eine geeignete Einrichtung anzugeben, wird gemäß der Erfindung dadurch gelöst, daß an einem Gehäuse des Filters und/oder an einem mit dem Gehäuse des Filters verbundenen Bauteil ein Körperschallaufnehmer angeordnet ist, dem eine Auswerteeinheit zugeordnet ist.

Mit dieser Einrichtung wird wie mit dem genannten Verfahren der Vorteil erzielt, daß ein Körperschallsignal, das von einem losen Filterteil oder von nicht zurückgehaltenen Schadstoffen in Form von losen Teilen, z.B. in der Form von Partikeln, ausgelöst wird, zuverlässig erkannt werden kann. Dieses Signal gibt einen Hinweis auf die Funktionsfähigkeit des Filters bevor nennenswerte Schadstoffmengen infolge eines Defekts am Filter durch dieses hindurchgelangen könnten.

Das Filter kann beispielsweise eine Filterschicht und/oder eine Wirbelschicht aus Festkörpern aufweisen. Die Schicht, die auch ein dicker Körper sein kann, kann eine Kugelpackung, z.B. aus Stahlkugeln, oder ein Kiesbett umfassen. Lose Festkörper, z.B. Kugeln oder Kiesteile, geben gut zu erkennende Körperschallsignale ab, wenn sie auf andere Festkörper, das Filtergehäuse oder ein damit verbundenes Bauteil auftreffen.

Mit dem Verfahren und der Einrichtung nach der Erfindung wird insbesondere der Vorteil erzielt, daß eine beeinträchtigte Funktionsfähigkeit eines Filters frühzeitig erkannt werden kann, bevor Schadstoffe in größerem Umfang vom Filter durchgelassen werden.

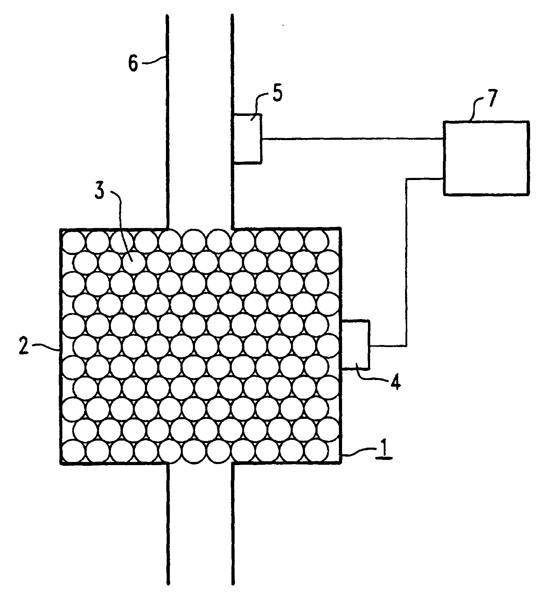

Die Erfindung wird anhand der Zeichnung näher erläutert:

Die Zeichnung zeigt eine Einrichtung zum Überwachen eines Filters auf Funktionsfähigkeit.

Das Filter 1, mit dem beispielsweise ein Luftstrom von Schadstoffpartikeln befreit wird, besteht aus einem Gehäuse 2, in dem eine Filterschicht aus einer Stahlkugelpackung 3 angeordnet ist. An die Stelle der Stahlkugelpackung 3 können auch eine andere Kugelpackung, ein Kiesbett, oder auch eine Wirbelschicht treten. In der Stahlkugelpackung 3 werden die Schadstoffe zurückgehalten.

Infolge einer Beschädigung kann ein Teil des Filters 1, z.B. eine Kugel der Stahlkugelpackung 3 aus der sonst dichten Pakkung im Gehäuse 2 gelöst sein. Infolge der Strömung durch das Filter 1 schlägt diese Kugel dann an die Wand des Gehäuses 2 oder an andere Kugeln an, und erzeugt ein Körperschallsignal.

Es kann auch dazu kommen, daß Schadstoffe in der Form von losen Teilen, z.B. in der Form von Partikeln, die infolge einer Beschädigung, oder weil das Filter 1 nicht mehr aufnahmefähig ist, im Filter 1 nicht mehr aufgenommen werden, auf das Gehäuse 2, die Stahlkugelpackung 3 oder auf ein mit dem Gehäuse 2 verbundes Bauteil auftreffen und dort ein Körperschallsignal erzeugen.

Zum Aufnehmen des Körperschallsignals ist am Gehäuse 2 des Filters 1 und/oder an einem mit dem Filter 1 verbundenen Bauteil ein Körperschallaufnehmer 4, 5 angeordnet. Insbesondere dann, wenn das Auftreffen von losen Schadstoffteilen, die im Filter 1 nicht zurückgehalten worden sind, erkannt werden soll, ist ein Körperschallaufnehmer 5, der an einer Ableitung 6 des Filters 1 angeordnet ist, besonders geeignet.

Zur Auswertung des Körperschallsignals sind der Körperschallaufnehmer 4, der am Gehäuse 2 des Filters 1 angeordnet ist und/oder der Körperschallaufnehmer 5, der an der Ableitung 6 angeordnet ist, über Datenleitungen mit einer Auswerteeinheit 7 verbunden. In der Auswerteeinheit 7 können das Körperschallsignal bzw. ein Signalverlauf mit einem vorgegebenen Wert oder Werteverlauf verglichen werden, der auf die üblichen Geräusche in einem funktionsfähigen Filter 1 zurückzuführen ist. Bei Abweichungen kann dann an der Auswerteeinheit 7 angezeigt werden, daß das Filter 1 nicht voll funktionsfähig ist.

## Patentansprüche

1. Verfahren zum Überwachen eines Filters (1) auf Funktionsfähigkeit,
**dadurch gekennzeichnet, daß** an einem Gehäuse (2) des Filters (1) und/oder an einem mit dem Gehäuse (2) des Filters (1) verbundenen Bauteil ein Körperschallsignal gemessen wird, und daß eine Abweichung des Körperschallsignals von einem vorgegebenen Wert oder Wertebereich ermittelt wird.

2. Verfahren nach Anspruch 1,
**dadurch gekennzeichnet, daß** das Filter (1) eine Filterschicht und/oder eine Wirbelschicht aus Festkörpern aufweist.

3. Einrichtung zum Überwachen eines Filters (1) auf Funktionsfähigkeit,
**dadurch gekennzeichnet, daß** an einem Gehäuse (2) des Filters (1) und/oder an einem mit dem Gehäuse (2) des Filters (1) verbundenen Bauteil ein Körperschallaufnehmer (4, 5) angeordnet ist, dem eine Auswerteeinheit (7) zugeordnet ist.

4. Einrichtung nach Anspruch 3,
**dadurch gekennzeichnet, daß** das Filter (1) eine Filterschicht und/oder eine Wirbelschicht aus Festkörpern aufweist.

## Claims

1. Method for monitoring the functioning capacity of a filter (1), **characterized in that** a solid-borne sound signal is measured on a housing (2) of the filter (1) and/or on a component connected to the housing (2) of the filter (1), and **in that** a deviation of the solid-borne'sound signal from a predetermined value or value range is determined.

2. Method according to Claim 1, **characterized in that** the filter (1) has a filter layer and/or a fluidized bed consisting of solid bodies.

3. Device for monitoring the functioning capacity of a filter (1), **characterized in that** a solid-borne sound receiver (4, 5), which is assigned an evaluation unit (7), is arranged on a housing (2) of the filter (1) and/or on a component connected to the housing (2) of the filter (1).

4. Device according to Claim 3, **characterized in that** the filter (1) has a filter layer and/or a fluidized bed consisting of solid bodies.

## Revendications

1. Procédé pour surveiller si un filtre (1) est apte à fonctionner, **caractérisé en ce que** l'on mesure un signal de bruit de structure sur une enveloppe (2) du filtre et/ou sur un élément relié à l'enveloppe (2) du filtre et **en ce que** l'on détermine un écart du signal de bruit de structure à une valeur prescrite ou à un domaine de valeurs prescrit.

2. Procédé suivant la revendication 1 **caractérisé en ce que** le filtre (1 ) a une couche filtrante et/ou un lit fluidisé constitué de corps solides.

3. Dispositif de surveillance de l'aptitude à fonctionner d'un filtre (1), **caractérisé en ce qu'**il est placé sur une enveloppe (2). du filtre (1 ) et/ou sur un élément relié à l'enveloppe (2) du filtre (1 ), un capteur (4, 5) de bruit de structure auquel est associée une unité (7) d'interprétation.

4. Dispositif suivant la revendication 3, **caractérisé en ce que** le filtre (1 ) a une couche filtrante et/ou un lit fluidisé constitué de corps solides.
